# EUROPÄISCHE PATENTSCHRIFT

(11) **EP 2 040 964 B1**
(45) Veröffentlichungstag und Bekanntmachung des Hinweises auf die Patenterteilung: **31.10.2012**
(21) Anmeldenummer: 07787353.7
(22) Anmeldetag: 11.07.2007
(51) Int. Cl.: B60T 8/40

(54) **KRAFTFAHRZEUGBREMSSYSTEM MIT EINEM NIEDERDRUCKSPEICHER**
MOTOR VEHICLE BRAKE SYSTEM HAVING A LOW PRESSURE ACCUMULATOR
SYSTÈME DE FREINAGE DE VÉHICULE AVEC UN ACCUMULATEUR BASSE PRESSION

(30) Priorität: 11.07.2006 DE 102006032291; 11.07.2007 DE 102007032588
(43) Veröffentlichungstag der Anmeldung: 01.04.2009
(73) Patentinhaber: Continental Teves AG & Co. oHG, 60488 Frankfurt (DE)
(72) Erfinder: BURKHARD, Dieter, 55411 Bingen-Büdesheim (DE); KOHL, Andreas, 55126 Mainz (DE); MÜLLER, Jochen, 35037 Marburg (DE); ATTALLAH, Faouzi, 64287 Darmstadt (DE)
(86) Internationale Anmeldenummer: PCT/EP2007/057079
(87) Internationale Veröffentlichungsnummer: WO 2008/006845

(56) Entgegenhaltungen:
- WO-A-94/18041
- WO-A-96/15927
- WO-A-03/082645
- WO-A-2005/007475
- DE-A1- 4 232 614
- DE-A1- 19 946 777
- DE-A1-102005 041 556

## Beschreibung

Die Erfindung bezieht sich auf ein Kraftfahrzeugbremssystem gemäß Anspruch 1. Ein derartiges Kraftfahrzeugbremssystem ist aus der DE 4232614 A1 bekannt.

Ein derartiges Bremssystem kommt üblicherweise im Rahmen eines ABS-Systems zum Einsatz, wobei in derartigen Systemen typischerweise die in die Rückströmleitung geschaltete Förderpumpe abhängig von dem so genannten Vordruck, also dem zwischen dem Hauptbremszylinder und dem Eintrittsventil des Radbremsmoduls anliegenden Druck, gesteuert wird.

Aus der DE 199 46 777 A1 ist dabei ein Verfahren bekannt, welches zur Abschätzung eines zwischen einem Hauptbremszylinder und einem Einlassventil eines Radbremszylinders einer Kraftfahrzeugbremsanlage herrschenden Vordrucks die Nachlaufspannung eines getaktet betriebenen Motors einer Pumpe, welche zur Rückförderung von Bremsflüssigkeit aus einer ausgangsseitig von dem Radbremszylinder angeordneten Speicherkammer in den Hauptbremszylinder verwendet wird, und den in der Speicherkammer ermittelten oder gemessenen Speicherkammerdruck verwendet.

Weiterhin zeigt die DE 10 2005 041 556 A1 ein Verfahren zur Bestimmung des zwischen dem Hauptbremszylinder und dem Einlassventil des Radbremszylinders herrschenden Vordrucks auf. Dieses bestimmt den Vordruck unter Berücksichtigung des Verlaufs einer Nachlaufspannung eines getaktet betriebenen Motors einer Pumpe, welche zur Rückförderung von Bremsflüssigkeit aus einem Niederdruckspeicher in den Hauptbremszylinder verwendet wird. Dabei werden mehrere Kenngrößen des Spannungsverlaufs gemessen und jeweils zur Bestimmung eines Vordruckwertes herangezogen. Weiterhin wird eine Mittelung der aus den verschiedenen Kenngrößen bestimmten Vordruckwerte und eine zeitliche Mittelung der Vordruckwerte zur Dämpfung von Fluktuationen durchgeführt.

Dazu wird eine Bewertung der Qualität und/oder Zuverlässigkeit der gemessenen Kenngrößen, eine Filterung und/oder Aufbereitung der Kenngrößen und/oder der daraus bestimmten Vordruckwerte bei mangelnder Qualität und/oder Zuverlässigkeit der gemessenen Kenngrößen herangezogen, wobei nur Druckwerte von ähnlicher Größe herangezogen werden.

Das Kraftfahrzeugbremssystem kann einen, aber auch mehrere Niederdruckspeicher umfassen. Vorzugsweise sind zwei Niederdruckspeicher vorgesehen, die während des Betriebs nicht zwangsläufig den gleichen Füllstand aufweisen müssen.

Der Füllstand des Niederdruckspeichers ergibt sich aus dem Volumen, welches von den Auslassventilen für die Radzylinder in den Niederdruckspeicher eingelassen wird und aus dem Fördervolumen der Pumpe, welche den Niederdruckspeicher entleert. Die Einlassmenge während einer ABS-Regelung hängt bekanntlich von der Ansteuerzeit der Auslassventile und dem Radzylinderdruck ab. Der Radzylinderdruck lässt sich, wenn kein Drucksensor vorhanden ist, bekanntlich modellhaft berechnen und ist üblicherweise in einem ABS-Regelprogramm als Parameter verfügbar. Die Ansteuerzeiten sind ebenfalls bekannt, so dass der Volumenzufluss ebenfalls näherungsweise bestimmbar ist. Der Volumenzufluss aus dem Niederdruckspeicher ergibt sich auf an sich bekannte Weise aus der Betrachtung der Generatorspannung der Pumpe. Letztlich ist es also möglich, aus den vorhandenen Informationen den Füllstand des Niederdruckspeichers während einer ABS-Regelung zumindest in gewisser Näherung zu berechnen (Niederdruckspeichermodell).

Wenn in einem ABS-kontrollierten Bremssystem ein Rad die Tendenz zum Stillstand zeigt, wird der Bremsdruck im hydraulischen Bremskreislauf gesenkt, indem die Flüssigkeitsmenge der Bremsflüssigkeit im Kreislauf reduziert wird. Diese abgezogene Bremsflüssigkeit wird in einer Anzahl von separaten Niederdruckspeichern zwischengespeichert und kann auf entsprechende Anforderung leicht wieder in den Bremskreislauf zurückgeführt werden.

Die gemessene oder aufgrund der genannten Modellberechnung geschätzte verfügbare Menge an Bremsflüssigkeit wird im Bremssystem eines Kraftfahrzeugs als hauptsächliches Kriterium für eine Situationsbeurteilung im NDS genutzt. Zur Vervollständigung und für eine Selbstkontrolle der Fahrzeugsysteme wird das Verhalten der Räder des Fahrzeuges ebenfalls ausgewertet.

Der gesamte ABS-kontrollierte Bremsvorgang soll mit einem Minimum an benötigter Bremspumpeneinschaltung auskommen. Folgende Anforderungen werden dazu an das Bremssystem gestellt:
1. Die Pumpe soll so ökonomisch wie möglich eingesetzt werden.
2. Das Pumpengeräusch soll so weit als möglich reduziert werden.
3. In Abhängigkeit zur Pumpentätigkeit sollte sichergestellt sein, dass im Druckanstieg nur kleinere Schwankungen auftreten.
4. Der Rückprall des Bremspedals soll möglichst weitgehend reduziert werden.
5. Zu jeder Zeit soll genügend freier Raum im LPR oder NDS zur Aufnahme eines Drucküberschusses zur Verfügung stehen.
6. Alle genannten Anforderungen sollen unabhängig vom Fahrzeugtyp sowie von Betriebstemperaturen und sonstigen Bedingungen erfüllbar sein.

Während eines ABS-kontrollierten Bremsvorgangs ist die Menge der Bremsflüssigkeit innerhalb des NDS das Ergebnis zweier parallel ablaufender Prozesse:
1. In-flow (Vᵢₙ): Die Menge an Bremsflüssigkeit, die aus dem Bremskreislauf abgezogen wird, kennzeichnet einen Druckabfall, der durch das ABS-System verursacht wird.
2. Out-flow (Vₒᵤₜ): Hierunter versteht man den Rückfluss der Bremsflüssigkeit in den so genannten THZ-Kreislauf. THZ ist die Bezeichnung für den so genannten Tandem Master Zylinder, d. h. den Hauptbremszylinder, der zur Aufnahme der Bremsflüssigkeit und zum Druckaufbau auf Anforderung dient.

Dadurch errechnet sich die Menge der im NDS verfügbaren Bremsflüssigkeit aus der Formel V_{NDS} = Vᵢₙ - Vₒᵤₜ.

Ein Niederdruckspeicher hat bekanntermaßen einen vom Füllstand abhängigen Druckverlauf. Ist der Füllstand niedrig, so ist der Druck im Niederdruckspeicher gering. Je höher der Füllstand ist, desto größer wird der Druck im Niederdruckspeicher. Die in einem Kraftfahrzeugbremssystem mit einem Niederdruckspeicher vorhandene Rückförderpumpe könnte prinzipiell immer mit voller Leistung betrieben werden, so dass der Niederdruckspeicher ständig leer ist. Dies ist jedoch aus Gründen des Energieverbrauchs, der Geräuschentwicklung und des Pedalgefühls nicht zweckmäßig, wobei insbesondere eine zu häufige Pumpenaktivität das Pedalgefühl reduziert.

An sich bekannte Verfahren zur Pumpenregelung, beispielsweise die Regelung, durch die der Raddruck von einem Ist-Wert auf einen vorgegebenen Soll-Wert gebracht wird, sind zudem nicht in allen Fahrsituationen optimal. So kann es bei einer Bremsenregelung auf sehr niedrigem Reibwert vorkommen, dass der Niederdruckspeicher nicht ausreichend entleert ist.

In diesem Fall ist der Druck im Niederdruckspeicher zu groß, um ein bedarfsgerechtes Lösen der Bremsen durch Abströmen des Bremsmittels aus dem Hydraulikstrang über die Auslassventile der Radzylinder in den Niederdruckspeicher und somit eine Reduktion des Drucks im Radbremsmodul noch zuzulassen. Damit könnte die betriebliche Sicherheit des Systems beeinträchtigt werden.

Der Erfindung liegt daher die Aufgabe zugrunde, ein Kraftfahrzeugbremssystem der genannten Art anzugeben, das bei komfortablem Pedalgefühl eine besonders hohe betriebliche Sicherheit bietet.

Diese Aufgabe wird erfindungsgemäß durch die Merkmale des Anspruchs 1 gelöst.

Vorteilhafte Ausgestaltungen der Erfindung sind Gegenstand der Unteransprüche.

Die Erfindung geht von der Überlegung aus, dass für ein komfortables Pedalgefühl oder allgemein einen hohen Nutzerkomfort die Anzahl der Aktivierungen der Pumpe, also die Anzahl der Pumpentaktungen, besonders gering gehalten werden sollte. Um dennoch in jedem Fall eine besonders hohe betriebliche Sicherheit zu gewährleisten, sollte eine Pumpenaktivierung besonders bedarfsgerecht und damit ausgerichtet am aktuellen Betriebszustand eingeleitet werden. Dazu ist unter konsequenter Abkehr vom Konzept einer Pumpenaktivierung nach einem vorher festgelegten, nicht mehr veränderbaren Pumpenmodell vorgesehen, den Fahrzeugzustand und die Fahrsituation unter gezielter Berücksichtigung einzelner, geeignet ausgewählter Parameter bei der Pumpensteuerung zugrunde zu legen. Zu diesen Parametern zählen solche, die durch Fahrsituationen und Betriebszustände wie
- überfüllter Niederdruckspeicher,
- Niedrig-Reibwert-Situation sowie
- Pumpenstillstand oder annähernder Pumpentillstand definiert werden.

Als Parameter ist dabei erfindungsgemäβ der Füllstand im Niederdruckspeicher an sich vorgesehen. In Alternativ oder zusätzlicher Ausgestaltung kann aber auch die zeitliche Ableitung oder der Gradient dieses Füllstandes berücksichtigt werden, so dass die Pumpensteuerung in der Art einer Prognose auch auf den ermittelten Trend bei der Ermittlung dieses Füllstandes beruht. Damit ist eine um den Gradienten ergänzte Pumpenansteuerung in der Art eines Überganges von einer potenzialen (P-) Charakteristik auf eine kombinierte proportional - differenziale (PD-) Charakteristik eines Regelsystems ausgelegt.

Des Weiteren werden auch Temperaturwerte oder Viskositätswerte des Niederdrucksystems als Parameter berücksichtigt.

Um eine besonders genaue Beurteilung der jeweiligen Fahrsituation durchführen und der Steuereinheit die Ermittlung eines Stellwertes, der die Förderpumpe adaptiv, also abgeleitet aus für das Kraftfahrzeug spezifischen Erfahrungswerten, mit den für ein Abführen der Bremsflüssigkeit aus dem Niederdruckspeicher notwendigen Informationen versorgt, zu ermöglichen, ist vorteilhafterweise ein Kennwert vorgesehen, der aus Raddrehzahlen, insbesondere den Schlupf eines oder mehrerer Räder, abgeleitet ist.

Um die Steuereinheit mit für die Beurteilung der Fahrsituation und der Notwendigkeit zur Pumpenaktivierung notwendigen Informationen versorgen zu können, ist eine Spannungsmessung, also die Ermittlung einer EMK (ElektroMotorKraft) der Pumpe, vorgesehen, wobei die Pumpe während eines Bremszyklus mindestens einen Arbeitstakt im Leerlauf läuft und die aus der Pumpentätigkeit im Leerlauf generierte Spannung Rückschlüsse auf den zur Überwindung des Drucks im Niederdruckspeicher notwendige Kraft zulässt.

Die mit der Erfindung erzielten Vorteile bestehen insbesondere darin, dass durch die Berücksichtung des Füllstandes im Niederdruckspeicher, direkt und/oder in Verbindung mit seiner zeitlichen Ableitung, bei der Ansteuerung der Rückförderpumpe einer dynamischen Erkennung der Pumpleistung und deren Wirkungsgrades ermöglicht ist. Dabei können Extremsituationen wie zu hohem oder zu niedrigem Druck im Bremssystem, die sich beeinflussend auf die Sicherheit und den Komfort auswirken können, in ABS-kontrollierten Bremsvorgängen gezielt vermieden und damit die betriebliche Sicherheit des Kraftfahrzeuges bei hohem Komfort für den Benutzer weitgehend sichergestellt werden.

Für eine vollständige Kontrolle der Pumpe während eines Zyklus, also eines ABS-kontrollierten Bremsvorgangs, und eine adaptive Steuerung der Pumpenaktivierung können drei Phasen der Kontrolle vorgesehen werden:
1. Out-off-Überwachungsphase:
   Diese Stufe wird eingeleitet, um einen Zeitbereich zu kennzeichnen, der außerhalb des Zyklus eines ABS-kontrollierten Bremsvorgangs liegt, während die Pumpe nicht in Funktion tritt. Diese Stufe dient dazu, alle Parameter, die für die Auswertung des ABS-kontrollierten Bremsvorgangs benötigt werden, zurückzusetzen, ein so genanntes Reset.
2. Die Überwachungsphase:
   Während eines ABS-kontrollierten Bremsvorgangs kann das Zeitintervall der Pumpe einen Wert annehmen von 1 bis 11. Dieser Wert hängt von vielen Bedingungen ab. Diese werden im Nachfolgenden gesondert aufgelistet. Diese überaus wichtige Phase ist der Kern der adaptiven Kontrolle der Pumpe.
3. Die Endüberwachungsphase:
   Diese Phase hat zwei besondere Ziele, die erreicht werden sollen:
      1. Den Austritt aus einem ABS-kontrollierten Bremsvorgang zu glätten, d. h. keine Extremsituation hervorzurufen oder in einer Extremsituation zu verharren, insbesondere, was die Stellung und Bewegung des Bremspedals betrifft.
      2. Die Bedingungen für einen eventuellen nächsten ABS-kontrollierten Bremsvorgang vorzubereiten.

In einer Pumpenüberwachungsphase werden mehrere untergeordnete Phasen von der Einleitung des Bremsvorgangs bis hin zur Kontrolle der Flüssigkeitsmenge (im NDS) aufgelistet. Für eine Selbstkontrolle nutzt diese Pumpenüberwachungsphase ebenfalls die Auswertung der Zustände der Fahrzeugräder, um die Zeitintervalle der Pumpe zu überprüfen und einzustellen.

Dieser spezielle Vorgang wird von einem unterstützenden Interface, das parallel eingesetzt wird, überwacht und begleitet.

Zu den Schlüsselparametern zählt beispielsweise die Menge der Flüssigkeit. Werden zwei oder mehrere Niederdruckspeicher (NDS) eingesetzt, ist der Zustrom von Bremsflüssigkeit in diese Speicher nicht zwangsläufig identisch oder erfolgt synchron. Daher ist es in dieser Situation besonders vorteilhaft, das Maximum aller Flüssigkeitsstände zu nutzen.

Des Weiteren ist die Pumpenleistung ein wichtiger Faktor: Wenn die Versorgungsleistung auf einen bestimmten konstanten Wert voreingestellt ist, stellt nur das höchste Pumpenintervall das höchste Motordrehmoment bereit.

Im Falle einer PWM-Ansteuerung des Motors, wobei PWM sich als Puls_Weite_Modulation versteht, wird dieser bevorzugt mit einer festen PWM-Frequenz angesteuert, wobei die "AN"-Zeit der PWM, also der Duty-Cyle, variabel ist. Aufgrund der Digitalansteuerung lässt sich die "AN"-Zeit vorzugsweise nur in bestimmten Minimalschritten ansteuern, welche beispielsweise eine Länge von 5 ms haben. Soll z. B. die Pumpe mit einer "AN"-Zeit von 10 ms angesteuert werden, wird ein geeigneter interner Wert L auf den Wert 2 gesetzt. L = 1 würde dementsprechend einer Pulsdauer "AN" von 5 ms entsprechen.

In der "AUS"-Phase der PWM-Ansteuerung kann auf an sich bekannte Weise die Generatorspannung des Motors bestimmt werden. Das Bremssystem gemäß der Erfindung umfasst daher bevorzugt auch eine Einrichtung zur Bestimmung und Auswertung der Generatorspannung des Motors. Durch die Auswertung kann festgestellt werden, ob die Pumpe bei einer bestimmten Leistungsansteuerung, z. B. mit einem Wert von L = 150, überhaupt etwas fördert. Ist die Leistung der Pumpe zu gering, läuft die Pumpe nicht an. Dies ist dadurch feststellbar, dass keine Generatorspannung in der "AUS"-Phase auftritt.

Da die Pumpe gegen große mechanische Kräfte arbeiten muss, verursacht durch den Druck des Tandem Master Zylinders (THZ) auf die Kolben, ist dies während des ABS-kontrollierten Bremsvorgangs ein wichtiges Kriterium. Wenn zu einem Zeitpunkt, an dem die Pumpe besonders hoch belastet ist, dieses generierte Motordrehmoment nicht ausreicht, den Druck vom THZ zu überwinden, arbeitet die Pumpe nicht. Das kann katastrophale Folgen für die Funktion des gesamten ABS-Systems mit sich bringen.

Vor Einsatz des ABS-Systems sollte der bereits genannte Out-flow der Pumpe mit typischen Drücken des THZ verglichen werden. Eine solche Betrachtung erlaubt außerdem eine Berechnung/Auswertung der Differenz im Durchfluss zwischen zwei aufeinander folgenden Pumpenintervallen. Aus den gewonnenen Erfahrungswerten können Referenzparameter für eine adaptive Einleitung der Pumpenaktivierungen gewonnen werden.

Mit Aktivierung des ABS-Systems wird ebenfalls die Pumpe aktiviert. Die Aktivierung der Pumpe mit einem spezifischen Timing ist ein besonders kritischer Zeitpunkt, da zu Beginn eines ABS-kontrollierten Bremsvorgangs der NDS möglicherweise vollständig entleert werden muss. Das kann von der Beschaffenheit der Straßenoberfläche abhängig sein, beispielsweise bei Eisglätte oder Schnee, und vom verwendeten Druck, der vom THZ zur Verfügung gestellt wird.

Sicherheitshalber kann der Einstiegswert des Pumpenintervalls unter Einbeziehung der Leistungsspezifikationen der Pumpe voreingestellt werden. Sind diese nicht bekannt, sollte die Pumpentätigkeit aus Sicherheitsgründen mit dem Wert 2 eingeleitet und der verwendete/geschätzte THZ-Druck überwacht werden. Liegt dieser oberhalb eines vorgegebenen Wertes, beispielsweise 100 bar, sollte das Pumpenintervall konsequent gesteigert werden.

Typischerweise ist ein NDS durch einen beweglichen Kolben in zwei Bereiche unterteilt. Auf der dem Speichereingang gegenüberliegenden Seite wird dieser bewegliche Kolben durch eine Druckfeder abgestützt. Bei einem extrem niedrigen Reibungskoeffizienten zwischen Rad und Fahrbahnoberfläche kann bereits ein Restdruck von wenigen Bar im NDS zur Radblockade führen, da eine Absenkung des Raddrucks, nötigenfalls bis auf 0 bar, nicht möglich ist.

In diesem Fall sollte das Pumpenintervall sofort und signifikant erhöht werden, um den NDS so schnell wie möglich zu entleeren und den Druck auf einen Wert nahe Null zu reduzieren.

Das Pumpenintervall sollte mindestens um den Wert "1" erhöht werden, um einen schnellen Ausweg aus dieser Situation sicherzustellen. Besteht diese Situation weiterhin, muss das Pumpenintervall erneut erhöht werden.

Im entgegensetzten Fall, wenn beispielsweise ein Rad oder mehrere Räder die Tendenz zur Beschleunigung aufzeigen, sollte das Pumpenintervall wieder reduziert werden.

Die Nutzung eines hohen Pumpenintervalls sollte streng eingeschränkt werden, um den gestellten Anforderungen zu entsprechen. Eine solche Situation ist auch daher besonders interessant, weil sie die Berechnung des so genannten "Wheel Blocking Volumes" erlaubt, also der maximalen Flüssigkeitsmenge im NDS, die zu einer Blockade eines Rades/mehrerer Räder führt.

In perfekten Umgebungsbedingungen reicht eine Überwachung der Flüssigkeitsmenge aus, den Anforderungen zu genügen. Ausnahmen davon können nicht einfach vorhergesehen werden. Daher wird ein besonderes Interface konzipiert, das in diesen Ausnahmesituationen zum Einsatz kommt. Die Beschreibung dieses Interface erfolgt später.

Wegen der Schwankungen des Bremsflüssigkeitsstandes im NDS kann die Durchflussmenge an Bremsflüssigkeit nicht direkt als Parameter genutzt, aber wie folgt ausgewertet und berechnet werden:
1. Bei Einleitung eines neuen Pumpenintervalls wird ein Referenzwert für die Menge an Bremsflüssigkeit aufgezeichnet.
2. In jedem Durchgang wird die maximale Flüssigkeitsmenge im NDS gemessen und aufgezeichnet.
3. Nach Beendigung jedes PWM wird eine Durchschnittsmenge der einzelnen Durchgänge berechnet, genauso wie die Durchschnittsdurchflussmenge eine kumulierte Durchschnittsmenge darstellt, die sich aus der Differenz aus der Durchschnittsmenge der einzelnen Durchgänge und dem eingangs aufgezeichneten Referenzwert für die Menge an Bremsflüssigkeit berechnet.

Nach diesen Berechnungen kann der Wert der Durchflussmenge als Parameter genutzt werden. Nach Anwendung des Anfangspumpenintervalls kann eine Beobachtung der Durchflussmengen dazu dienen zu prüfen, ob das Pumpenintervall und die Durchflussmenge
- zu hoch ist und reduziert werden muss,
- dermaßen beschaffen ist, dass diese Werte beibehalten werden können, oder
- so niedrig ist, dass die Anzahl der Takte erhöht werden muss.

Durch eine entsprechende Anpassung oder Nachführung der Pumpensteuerung ist diese somit adaptiv ausgelegt.

Ein Anstieg der Durchflussmenge tritt in erster Linie bei einem Wechsel der Fahrbahnoberfläche, beispielsweise bei einem Übergang von Asphalt zu Eis auf, d. h. der so genannte Out-flow des NDS ist geringer als der so genannte In-flow.

Jede Entscheidung, die in einem solchen Fall ansteht, basiert auf dem Wert der kumulierten Durchflussmenge einerseits und der Differenz im Durchfluss zwischen zwei aufeinander folgenden Pumpenintervallen andererseits.

Ist beispielsweise die kumulierte Durchflussmenge Q_{cum} größer als die Differenz im Durchfluss dQ_{P} zwischen zwei aufeinander folgenden Pumpenintervallen, sollte eine Erhöhung des Pumpenintervalls eingeleitet werden.

Beispielsweise wird das Pumpenintervall um den Wert 1 heraufgesetzt, wenn Q_{cum} = 150 mm³ und dQ_{P} = 120 mm³.

Wenn Q_{cum} = 300 mm³ bei unverändertem dQ_{P}, wird das Pumpenintervall um den Wert 2 heraufgesetzt.

Die Erhöhung des Pumpenintervalls ist begrenzt durch den höchsten operativen Wert, auf den das Pumpenintervall gesetzt werden kann. Analog hierzu ist das Verhalten bei einem Absinken der Durchflussmenge in umgekehrter Richtung anzusehen.

Die Durchflussmenge kompensiert genau den so genannten In-flow der Pumpe. Das zu Beginn verwendete Pumpenintervall sollte beibehalten werden. Die kumulierte Durchflussmenge sollte im NDS nicht zu nahe an die Menge heranreichen, die zu einer Blockade eines oder mehrerer Räder führt.

Während eines vorgegebenen Pumpenintervalls bewegt sich der Bremsflüssigkeitsstand im NDS zwischen einem Minimum und einem Maximum. Während eines solchen Zyklus wird der höchste erreichte Flüssigkeitsstand aufgezeichnet und als Referenzwert vermerkt.

Jede Anfrage wird nach einer Erhöhung des Pumpenintervalls nochmals überprüft: Wenn die zu diesem Zeitpunkt errechnete Menge unterhalb des durch den Referenzwert gebildeten Limits liegt, wird die Anfrage nach einer Erhöhung des Pumpenintervalls abgelehnt. Dadurch wird ein beständiges Pumpenintervall sichergestellt und unechte Schwankungen werden vermieden, die ansonsten abrupte und nicht notwendige Veränderungen im Pumpenintervall auslösen würden.

Eine besondere Überwachungsphase ist speziell dafür entwickelt worden, jedem unvorhersehbaren Verhalten jedes Fahrzeugrades zu begegnen. Es gibt viele verschiedene Gründe, die ein solches unvorhersehbares Verhalten verursachen können. Dazu zählt beispielsweise eine drastische Veränderung der Fahrbahnbeschaffenheit sowie andere.Voraussetzungen. Dies zeigt sich während der ABS-Regelung im u. a. Verhalten der Radgeschwindigkeiten.

Es sind zwei Möglichkeiten denkbar, die als Konsequenz auf ein solches Vorkommnis erfolgen:
- Es wird erkannt, dass die Pumpe zu langsam arbeitet. Aus Sicherheitsgründen wird eine sofortige Erhöhung des Pumpenintervalls eingeleitet.
- Aus Komforterwägungen wird die Pumpgeschwindigkeit durch Herabsetzen des Pumpenintervalls reduziert, wenn in dieser besonderen Überwachungsphase erkannt wird, dass die Pumpe zu schnell arbeitet.

Ein anderes Ergebnis ist die Qualität der Messung und/oder modellhafte Schätzung/Berechnung des Bremsflüssigkeitsstandes im NDS. Wenn in einem solchen Fall aufgrund von falschen Eingangswerten zwingenderweise ein falscher Wert für das Pumpenintervall berechnet wird, erfolgt vorteilhafterweise ein Ausgleich dadurch, dass eine der beschriebenen Situationen eintritt, nämlich die Erkennung in dieser besonderen Überwachungsphase, dass die Pumpe entweder zu schnell oder zu langsam arbeitet.

Unter Berücksichtigung der im Folgenden aufgelisteten Techniken kann eine zu langsam arbeitende Pumpe, also ein zu niedriges Pumpenintervall, einfach diagnostiziert werden:
Ähnlich der Situation eines extrem niedrigen Reibungskoeffizienten zwischen einem Rad/mehreren Rädern und der Fahrbahnoberfläche kann der Schlupf eines Rades oder mehrerer Räder, also ein Durchdrehen beispielsweise mit einem Wert von 60 %, erkannt werden. Der Hauptgrund hierfür ist der restliche Druck im NDS, obwohl für einen ABS-kontrollierten Bremsvorgang eine Drucksenkung benötigt würde. In diesem Fall wird das Pumpenintervall um einem großen Schritt angehoben.

Wenn nach der bereits erwähnten Lernphase und dem Anheben des Pumpenintervalls um einen großen Schritt der Schlupf des Rades oder der Räder nicht zurückgeht, wird das Pumpenintervall weiterhin erhöht. Diese alarmähnliche Situation hält an, bis der Schlupf des Rades oder der Räder kleiner geworden, beispielsweise unter 30 % gefallen ist.

Eine andere Technik zur Erkennung eines zu niedrigen Pumpenintervalls und damit einer zu langsam arbeitenden Pumpe ist die Überwachung der Leistung des Elektromotors der Pumpe, wenn die Durchflussmenge nicht gemessen werden kann. Ein sehr niedriger Leistungswert lässt auf einen blockierten Motor schließen. In diesem Fall kann kein Durchfluss der Bremsflüssigkeit erfolgen und das Risiko, dass der NDS mit Bremsflüssigkeit voll läuft, ist groß.

In einem solchen Fall ist die Leistung der Pumpe durch eine Erhöhung des Pumpenintervalls zu steigern. Üblicherweise genügt ein kleiner Schritt, beispielsweise die Erhöhung des Pumpenintervalls um den Wert 1, um das Problem zu beheben. Ist dieser Schritt nicht erfolgreich, wird ein Schritt mit der doppelten Weite, also der Erhöhung des Pumpenintervalls um den Wert 2, ausgeführt.

Es ist möglich, dass die Durchflussmenge sehr langsam ansteigt. In anderen Fällen ist der Anstieg derart groß und abrupt, dass die totale Menge die zur Blockade des Rades oder der Räder ausreichende Menge bei weitem übersteigt und evtl. nahe an das Limit des NDS herankommt. Dabei handelt es sich um eine Situation, die die Sicherheit des Fahrzeuges und seiner Insassen sowie des umgebenden Straßenverkehrs tangiert. Das Pumpenintervall muss in diesem Fall stark erhöht werden, bis dieser große und abrupte Anstieg verarbeitet ist. Nach Erreichung dieses Zieles nimmt das Pumpenintervall wieder seinen Ausgangswert an.

Analog zu einer zu langsam arbeitenden Pumpe kann diese auch zu schnell arbeiten. Allerdings handelt es sich hierbei nicht um ein Sicherheitsproblem, sondern lediglich der Komfort wird durch eine kurzzeitig zu schnell arbeitende Pumpe tangiert. Erstreckt sich die zu schnelle Tätigkeit der Pumpe allerdings über einen längeren Zeitraum, kann die Lebensdauer der Pumpe ernsthaft beeinträchtigt werden. Dies ist typischerweise das Ergebnis einer falschen Flüssigkeitsmenge im NDS oder einer falschen Meldung über den Flüssigkeitsstand, die zu einem höheren Pumpenintervall und somit zu einer höheren Durchflussmenge führt.

Oder es kann sich um ein Absinken des Druckes im so genannten THZ handeln, das den Kolben der Pumpe konsequent von der mechanischen Belastung befreit. Eine höhere Leistung des Elektromotors kann somit erreicht werden.

In einer solchen Situation sollte die Förderleistung der Pumpe durch eine Reduzierung des Pumpenintervalls herabgesetzt werden. Das geschieht, analog zu den bereits beschriebenen Schritten, im Falle einer zu schnell arbeitenden Pumpe durch einen kleinen Schritt, indem das Pumpenintervall um den Wert 1 reduziert wird. Ist diese Reduzierung nicht erfolgreich, wird ein doppelter Schritt, also die Reduzierung des Pumpenintervalls um den Wert 2, ausgeführt.

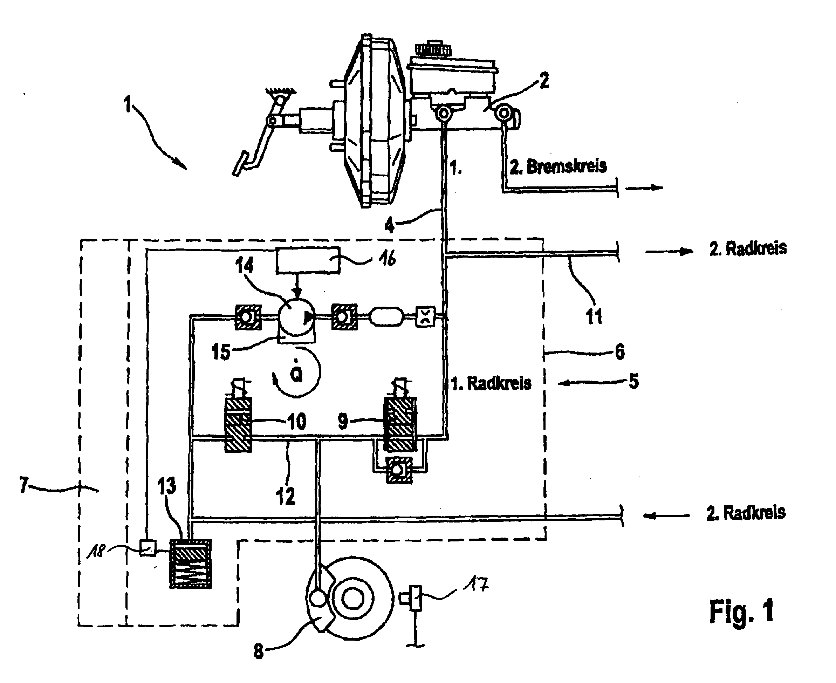

Ein Ausführungsbeispiel wird anhand einer Zeichnung näher erläutert. Darin zeigt die Figur exemplarisch einen Bremskreis einer schlupfgeregelten Kraftfahrzeugbremsanlage 1, wobei lediglich ein Radbremskreis dargestellt ist. Die Bremsanlage 1 umfasst ein Bremsgerät mit einem Hauptbremszylinder 2, welcher über eine hydraulische Verbindung 4 und eine Verteilvorrichtung 5, welche eine Hydraulikeinheit 6 und eine Elektronikeinheit 7 umfasst, mit einer Radbremse 8 verbunden ist. Die Hydraulikeinheit 6 verfügt über einen Aufnahmekörper für hydraulische und elektrohydraulische Bauelemente wie elektromagnetisch betätigbare Einlass- und Auslassventile 9, 10 für jede Radbremse 8. In der Verbindung 4 - noch vor einem stromlos geöffneten Einlassventil 9 für die besagte Radbremse 8 - befindet sich ein Abzweig 11 zu einem zweiten Radbremskreis. Ausgehend von der Radbremse 8 führt ein Rücklaufanschluss 12 über das stromlos geschlossene Auslassventil 10 zu einem Niederdruckspeicher 13, welcher zur Aufnahme des aus der Radbremse 8 infolge ABS-Regelzyklen abgelassenen Volumens von Hydraulikflüssigkeit ausgelegt ist.

Der Niederdruckspeicher 13 speist eine Saugseite einer motorangetriebenen Pumpe 14. Diese ist vorzugsweise als Radialkolbenpumpe ausgebildet und verfügt über hier nicht dargestellte Ventile. Dazu gehören jeweils ein Saugventil auf der Saugseite und ein Druckventil auf der Druckseite.

Motor 15 und Pumpe 14 sind vorzugsweise als Aggregat (Motor-Pumpen-Aggregat) ausgebildet und erlauben eine Rückförderung abgelassener Hydraulikflüssigkeit in Richtung Hauptbremszylinder 2. Typischerweise umfasst das Bremssystem zusätzliche Funktionalitäten wie beispielsweise eine Antriebsschlupfregelung (ESP), was wiederum ein dem Einlassventil 9 vorgeschaltetes, elektromagnetisch ansteuerbares und stromlos geöffnetes Trennventil erfordert.

Während einer ABS-Regelung stellt sich infolge von Druckabbauvorgängen über das Auslassventil 10 eine Druckdifferenz am Einlassventil 9 ein. Das aus der Radbremse 8 entwichene Volumen gelangt in der Niederdruckspeicher 13. Gleichzeitig wird die Pumpe 14 aktiviert und fördert das abgelassene Volumen - gegen den anliegenden Vordruck - wieder zurück in Richtung Hauptbremszylinder 2 und vor das Einlassventil 9.

Zur bedarfsgerechten Steuerung der Fördermenge der Pumpe 14 während eines ABS-Bremsvorgangs ist der Pumpe 14 eine Steuereinheit 16 vorgeschaltet. Diese Steuereinheit 16 erstellt aus für die jeweilige Fahrsituation charakteristischen Betriebsgrößen des Kraftfahrzeugs einen Stellwert, den sie an die Pumpe 14 übermittelt.

Die Steuereinheit 16 wird dateneingangsseitig mit Informationen gespeist, die die notwendigen Betriebsdaten zur Beurteilung sowohl der Fahrsituation als auch der Betriebssituation im Bremssystem 1 ermitteln und aufgrund dieser Parameter in Verbindung mit den gewonnenen Referenzdaten eine adaptive Leistungssteuerung der Förderpumpe 14 ermöglichen.

Dabei ist jeder Bremszyklus in eine Anzahl von Pumpentakten unterteilt. Eine vorgegebene Anzahl der Pumpentakte dient zur Einstellung der Pumpe 14 für einen Anfangswert. Je nach Fahrsituation und Betriebszustand wird die Anzahl adaptiv angepasst, um die Förderleistung der Pumpe 14 zu beeinflussen. In jedem Bremszyklus soll mindestens ein Pumpentakt für einen Freilauf der Pumpe 14 reserviert bleiben, in dem die Pumpe nicht durch den Motor 15 angetrieben wird. In diesem Pumpentakt generiert die Pumpe 14 in dem durch den Wegfall der Antriebskraft ermöglichten Leerlauf eine Spannung, die gemessen werden kann. Diese Spannung lässt eine Berechnung der EMK zu, aufgrund derer beurteilt werden kann, ob die Pumpe 14 gegen einen hohen Druck, also einen hohen Füllstand im Niederdruckspeicher 13, arbeitet. Daher ist ein solcher Pumpentakt, in dem die Pumpe 14 nicht angetrieben wird, für die Ermittlung des Stellwertes wichtig.

Zu den ermittelten und an die Steuereinheit 16 gesendeten Daten gehören der Füllstand der Bremsflüssigkeit im Niederdruckspeicher 13, Informationen über die Drehzahlen, insbesondere den Schlupf, an den Rädern des Kraftfahrzeuges, die über geeignete Aufnehmer 17 ermittelt werden, sowie die über die Pumpe im Leerlauf generierte Spannung, die am Motor 15 gemessen wird.

Deuten diese Daten darauf hin, dass beispielsweise ein hoher Füllstand der Bremsflüssigkeit im Niederdruckspeicher 13 erreicht ist, erhöht die Steuereinheit 16 die Anzahl der Pumpentakte. Fällt der Füllstand im Niederdruckspeicher 16 daraufhin ab, wird die Anzahl der Pumpentakte gesenkt, um die Förderleistung der Pumpe 14 während eines Bremszyklus zu reduzieren. Bleibt der Füllstand bei einem durch die Steuereinheit 16 an die Pumpe 14 übermittelten Stellwert für die Anzahl der Pumpentaktungen auf einem vorgegebenen Niveau, das einen sicheren Betrieb des Kraftfahrzeuges sicherstellt, bleibt die Anzahl der Pumpentakte gleich.

Das Verfahren zur Nutzung des Kraftfahrzeugbremssystems wurde hinsichtlich des Algorithmus zur Ansteuerung der Hydraulikpumpe verbessert, welche den Niederdruckspeicher entleert.

Hierdurch werden die Probleme eines zu hohen Füllstandes des Niederdruckspeichers oder einer zu häufigen Pumpenaktivität reduziert. Vor allem haben Temperaturschwankungen, bauliche Unterschiede sowie Leistungsaufnahme der Pumpen kaum Einfluss auf die Qualität der Füllstandsregelung, denn die hier angegebene Pumpenleistungsregelung erfolgt adaptiv.

Es hat sich ferner gezeigt, dass die durch die Rückförderung der Pumpe verursachte, bei bekannten Bremssystemen vielfach übliche Rückwirkung auf das Bremspedal, welche als Vibrieren und/oder Rückprellen des Pedals vom Fahrer spürbar ist, gegenüber dem bekannten Verfahren deutlich verringert werden kann. Dies ergibt sich durch einen ruhigeren, gleichmäßigen, der jeweiligen Situation angepassten Verlauf der Pumpenaktivität während der Pumpenregelung im Bremsvorgang.

Das Bremssystem kann einen oder mehrere Niederdruckspeicher umfassen. Vorzugsweise sind zwei Niederdruckspeicher vorgesehen. Im Falle mehrerer Niederdruckspeicher ist es möglich, dass die Niederdruckspeicher nicht den gleichen Füllstand haben. Es ist zweckmäßig, dass in dem Algorithmus für die Pumpensteuerung der Füllstand desjenigen Niederdruckspeichers zu Grunde gelegt wird, welcher den höchsten Füllstand hat. Auf diese Weise kann sichergestellt werden, dass die Förderleistung der Pumpe keinesfalls zu niedrig gewählt und das Blockieren eines oder mehrerer Räder vermieden wird.

Der Begriff "Bremsregelung" umfasst neben Bremsdruckregelungen während einer ABS-Bremsung auch Bremsdruckregelungen, die bei Antriebsschlupfregelung (ASR), Fahrdynamikregelung (ESP), Abstandsregelung (ACC) etc. vorkommen.

### Bezugszeichenliste

- 1: Bremsanlage
- 2: Hauptbremszylinder
- 4: hydraulische Verbindung
- 5: Verteilvorrichtung
- 6: Hydraulikeinheit
- 7: Elektronikeinheit
- 8: Radbremse
- 9: Einlassventil
- 10: Auslassventil
- 11: Abzweig
- 12: Rücklaufanschluss
- 13: Niederdruckspeicher
- 14: Pumpe
- 15: Motor
- 16: Steuereinheit
- 17: Ermittlungseinheit für Raddrehzahl/Schlupf
- 18: Ermittlungseinheit für den Bremsflüssigkeitsstand im Niederdruckspeicher

## Patentansprüche

1. Kraftfahrzeugbremssystem (1) mit einem Hydraulikstrang, über den von einem Bremszylinder (2) aus ein Radbremsmodul über eine Hydraulikeinheit (6) mit Bremsdruck beaufschlagbar ist, und an dem ein Niederdruckspeicher (13) zur vorübergehenden Aufnahme überschüssigen Bremsmittels angeschlossen ist, wobei der Niederdruckspeicher (13) zur Rückführung zwischengespeicherten Bremsmittels über eine Rückströmleitung und einer in die Rückströmleitung geschalteten Rückförderpumpe (14) mit dem Hydraulikstrang verbunden ist und wobei die Förderleistung der Rückförderpumpe (14) durch einen Stellwert bestimmt ist, der die "AN"-Zeit einer PWM-Ansteuerung des Pumpenmotors angibt,
**dadurch gekennzeichnet, dass**
- eine der Rückförderpumpe (14) zugeordnete Steuereinheit (16) den Stellwert während eines Bremszyklus, ausgehend von einem vorgegebenen Anfangswert, unter Berücksichtigung des Füllstandes im Niederdruckspeicher (13) und/oder von seiner zeitlichen Ableitung adaptiv angepasst ausgibt,
- dass die Steuereinheit (16) den Stellwert unter Berücksichtigung eines aus Raddrehzahlen oder eines Schlupfs eines oder mehrerer Räder abgeleiteten Kennwertes ausgibt,
- dass die Steuereinheit (16) den Stellwert unter Berücksichtigung einer durch die Pumpe (14) im Leerlauf generierten Spannung ausgibt und
- dass die Steuereinheit (16) Temperaturwerte oder Viskositätswerte der Hydraulikflüssigkeit im Niederdruckspeicher als Parameter berücksichtigt.

2. Kraftfahrzeugbremssystem nach Anspruch 1,
**dadurch gekennzeichnet, dass**
der vorgegebene Anfangswert des Stellwerts während des Bremszyklus an die Ergebnisse einer Lernphase der Steuereinheit angepasst ist.

3. Verfahren zum Betrieb eines Kraftfahrzeugbremssystem nach Anspruch 1 oder 2 mit dem Schritt:
Adaptiv angepasstes Ausgeben eines Stellwerts für die Anteuerung der Rückförderpumpe (14),
wobei bei der Ermittlung des Stellwertes
a) von einem vorgegebenen Anfangswert ausgegangen wird,
b) der Füllstand im Niederdruckspeicher (13) und/oder seine zeitliche Ableitung berücksichtigt wird,
c) ein Kennwert berücksichtigt wird, der aus Raddrehzahlen oder aus dem Schlupf eines oder mehrerer Räder abgeleitet ist,
d) die durch die Pumpe (14) im Leerlauf generierte Spannung berücksichtigt wird und
e) Temperaturwerte oder Viskositätswerte der Hydraulikflüssigkeit im Niederdruckspeicher als Parameter berücksichtigt werden.

## Claims

1. Motor vehicle brake system (1) having a hydraulic line via which brake pressure can be applied from a brake cylinder (2) to a wheel brake module by means of a hydraulic unit (6), and to which a low pressure accumulator (13) for temporarily receiving excess braking medium is connected, wherein the low pressure accumulator (13) is connected to the hydraulic line in order to feed back buffered braking medium via a feedback line and a feedback pump (14) which is connected into the feedback line, and wherein the delivery capacity of the feedback pump (14) is determined by a control value which indicates the "ON" time of a PWM actuation of the pump motor, **characterized in that**
- a control unit (16) which is assigned to the feedback pump (14) outputs the control value during a braking cycle, on the basis of a predefined initial value, adjusted adaptively taking into account the filling level in the low pressure accumulator (13) and/or its derivative over time,
- the control unit (16) outputs the control value taking into account a characteristic value which is derived from wheel speeds or a slip of one or more wheels,
- the control unit (16) outputs the control value taking into account a voltage generated by the pump (14) in the idling mode, and
- the control unit (16) takes account of temperature values or viscosity of the hydraulic fluid in the low pressure accumulator as parameters.

2. Motor vehicle brake system according to Claim 1, **characterized in that** the predefined initial value of the control value during the braking cycle is adapted to the results of a learning phase of the control unit.

3. Method for operating a motor vehicle brake system according to Claim 1 or 2, having the step of:
adaptively adjusted outputting a control value for actuating the feedback pump (14),
wherein during the determination of the control value
a) a predefined initial value is assumed,
b) the filling level in the low pressure accumulator (13) and/or its derivative over time are/is taken into account,
c) a characteristic value is taken into account which is derived from wheel speeds or from the slip of one or more wheels,
d) the voltage which is generated in the idling mode by means of the pump (14) is taken into account, and
e) temperature values or viscosity values of the hydraulic fluid in the low pressure accumulator are taken into account as parameters.

## Revendications

1. Système (1) de frein pour véhicule automobile présentant
un train hydraulique par l'intermédiaire duquel une pression de freinage peut être appliquée par un cylindre de frein (2) depuis un module de frein de roue et par l'intermédiaire d'une unité hydraulique (6),
un réservoir (13) à basse pression étant raccordé au train hydraulique pour reprendre temporairement le fluide de freinage en excès,
le réservoir (13) à basse pression étant relié au train hydraulique pour renvoyer le fluide de frein conservé temporairement par un conduit de renvoi et une pompe de renvoi (14) raccordée dans le conduit de renvoi,
la capacité de transport de la pompe de renvoi (14) étant définie par une valeur de réglage qui indique l'instant "marche" d'une commande PWM du moteur de la pompe,
**caractérisé en ce que**
une unité de commande (16) associée à la pompe de renvoi (14) délivre la valeur de réglage en l'adaptant de manière adaptative pendant un cycle de freinage partant d'une valeur initiale prédéterminée et en tenant compte de l'état de remplissage du réservoir (13) à basse pression et/ou de sa dérivée par rapport au temps,
**en ce que** l'unité de commande (16) délivre la valeur de réglage en tenant compte d'une valeur caractéristique dérivée de la vitesse de rotation des roues ou du patinage d'une ou de plusieurs roues,
**en ce que** l'unité de réglage (16) délivre la valeur de réglage en tenant compte d'une tension générée lorsque la pompe (14) fonctionne à vide et
**en ce que** les paramètres dont l'unité de commande (16) tient compte sont des valeurs de température ou des valeurs de viscosité du liquide hydraulique présent dans le réservoir à basse pression.

2. Système de frein pour véhicule automobile selon la revendication 1, **caractérisé en ce que** la valeur initiale prédéterminée de la valeur de réglage pendant le cycle de freinage est adaptée au résultat d'une phase d'apprentissage de l'unité de commande.

3. Procédé d'utilisation d'un système de freinage pour véhicule automobile selon les revendications 1 ou 2, le procédé comportant l'étape qui consiste à délivrer une valeur de réglage adaptée de manière adaptative à la commande de la pompe de renvoi (14) et dans lequel, lors de la détermination de la valeur de réglage,
a) on part d'une valeur initiale prédéterminée,
b) l'état de remplissage du réservoir (13) à basse pression et/ou sa dérivée par rapport au temps sont pris en compte,
c) une valeur caractéristique dérivée de la vitesse de rotation des roues ou du patinage de l'une ou de plusieurs des roues est prise en compte,
d) la tension générée par la pompe (14) lorsqu'elle fonctionne à vide est prise en compte et
e) des valeurs de température ou des valeurs de viscosité du fluide hydraulique présent dans le réservoir à basse pression sont prises en compte comme paramètres.
